# EUROPÄISCHE PATENTSCHRIFT

(11) **EP 4 335 731 B1**
(45) Veröffentlichungstag und Bekanntmachung des Hinweises auf die Patenterteilung: **25.12.2024**
(21) Anmeldenummer: 23192675.9
(22) Anmeldetag: 22.08.2023
(51) Int. Cl.: B62D 53/08, B62D 53/12

(54) **KÖNIGSZAPFENANORDNUNG**
KING PIN ASSEMBLY
ENSEMBLE DE TOURILLON DE TÊTE

(30) Priorität: 09.09.2022 DE 102022123057
(43) Veröffentlichungstag der Anmeldung: 13.03.2024
(73) Patentinhaber: JOST-Werke Deutschland GmbH, 63263 Neu-Isenburg (DE)
(72) Erfinder: Algüera, José Manuel, 63739 Aschaffenburg (DE); Schlotthauer, Rudolf, 63263 Neu-Isenburg (DE); Bockius, Alexander, 65462 Ginsheim-Gustavsburg (DE); Haber, Steffen, 64521 Groß-Gerau (DE); Hansen, Paul, 63263 Neu-Isenburg (DE); Gitzen, Stephan, 64560 Riedstadt (DE)
(74) Vertreter: WSL Patentanwälte Partnerschaft mbB

(56) Entgegenhaltungen:
- EP-A1- 1 900 620
- JP-A- H11 222 163
- US-A1- 2021 260 944
- US-B2- 7 793 966

## Beschreibung

Königszapfenanordnung für einen Sattelauflieger eines Lastzuges, umfassend einen eine Drehachse definierenden Königszapfen, ein um die Drehachse angeordnetes Drehlager und einen mit dem Drehlager verbundenen und um die Drehachse schwenkbaren Halter zur mittelbaren oder unmittelbaren Halterung insbesondere eines elektrischen und/oder elektromagnetischen und/oder pneumatischen und/oder hydraulischen Verbindungsmittels, wobei der Königszapfen einen Königszapfenflansch zum Montieren des Königszapfens mittelbar oder unmittelbar an dem Sattelauflieger aufweist, wobei das Drehlager einen relativ zum Königszapfen feststehenden Lagerring oder ein feststehendes Lagerringsegment und einen relativ hierzu drehbaren Lagerring oder ein drehbares Lagerringsegment aufweist und wobei der Halter an dem drehbaren Lagerring bzw. drehbaren Lagerringsegment fixiert ist.

Eine solche Königszapfenanordnung ist beispielsweise aus den Schriften US 7 793 966 B2, EP 3 891 051 A1, EP 1 918 179 A1 und DE10 2004 024 333 A1 bekannt.

Das Zugfahrzeug und der Sattelauflieger, auch einfach Auflieger genannt, bilden den Lastzug, der auch als Sattelzug bezeichnet wird. Auf dem Zugfahrzeug ist eine Sattelkupplungsplatte angeordnet, mit der der an der Unterseite des Sattelaufliegers befindliche Königszapfen in Eingriff gebracht und verriegelt wird. Die Sattelkupplungsplatte ist zum Ankuppeln des Aufliegers üblicherweise mit einer in Fahrtrichtung keilförmig zulaufenden Einfahröffnung ausgebildet, wobei die Einfahröffnung einen freien Bauraum mit einer Bauraumtiefe aufweist, die ein störungsfreies Ein- und Ausfahren des Königszapfens in die Sattelkupplungsplatte gewährleistet. Während des Ankuppelns gleitet der Auflieger mit seiner Aufliegerplatte, an der der Königszapfen mittelbar oder unmittelbar ortsfest montiert ist, auf der Oberfläche der Sattelkupplungsplatte, wodurch eine vertikale Positionsbestimmung erfolgt. Eine seitliche Führung wird über den Königszapfen gewährleistet, der während des Ankuppelns in der Einfahröffnung bis zum Erreichen seiner Veriegelungsposition zwangsgeführt ist. Die Einfahröffnung wird nach unten durch die Länge des Königszapfens bestimmt. Unterhalb der Einfahröffnung befindliche Bauteile, wie beispielsweise Verstärkungsrippen können mit anderen Worten beim An- und Abkuppeln des Aufliegers nicht vom Königszapfen erfasst werden.

Begriffe wie "vertikal", "horizontal", "oben" und "unten" beziehen sich hierin, soweit explizit nichts Abweichendes angegeben ist, auf die Schwerkraftrichtung. Begriffe wie "axial", "radial" und "tangential" beziehen sich hierin, soweit explizit nichts Abweichendes angegeben ist, auf die Drehachse, welche durch den Königszapfen definiert ist.

Das elektrische und/oder elektromagnetische und/oder pneumatische und/oder hydraulische Verbindungsmittel ist Teil eines Steckkupplungssystems zum Verbinden von Leitungen zwischen dem Zugfahrzeug und dem Auflieger, wie es beispielsweise ebenfalls in der DE10 2004 024 333 A1 beschrieben ist. Steckkupplungssysteme sind in unterschiedlichen Ausführungen bekannt. Das Steckkupplungssystem enthält zumindest Stecker und Steckerbuchse und in der Regel auch weitere Bauteile, die dem automatisierten Verbinden und Trennen von Stecker und Steckerbuchse beim An- bzw. Abkuppeln des Sattelaufliegers und des Zugfahrzeugs dienen. Der Begriff "Verbindungsmittel" umfasst in diesem Sinne also zumindest einen Stecker oder eine Steckerbuchse. Aus Sicherheitsgründen wird üblicherweise am Zugfahrzeug das stromführende Ende des Steckkupplungssystems als Steckerbuchse ausgeführt, während am Sattelauflieger der korrespondierende Stecker angeordnet ist. Insbesondere ist die Steckerbuchse an der Sattelkupplung ortsfest unterhalb der Einfahröffnung angeordnet und befindet sich somit in einem geschützten Bereich, in dem sie nicht mit dem Königszapfen beim Einfahren kollidieren kann.

Mit dem Begriff "Halter" wird sowohl einerseits bei mehrteiliger Ausführung einen Montagesockel für einen Tragrahmen verstanden, wobei das Verbindungsmittel an dem Tragrahmen und damit mittelbar an dem Halter (=Montagesockel) gehaltert ist, als auch andererseits bei einteiliger Ausgestaltung der Tragrahmen selbst bezeichnet, wobei dann das Verbindungsmittel unmittelbar oder mittelbar an dem Halter (=Tragrahmen) gehaltert ist.

Das Verbindungsmittel, in der Regel also der Stecker, ist üblicherweise auf der Unterseite des Tragrahmens oder innerhalb des Tragrahmens in einem Hohlraum angeordnet, wobei der Tragrahmen in einer horizontalen Ebene betrachtet eine keil- oder v-förmige Gestalt aufweist, die komplementär zu der keilförmigen Einfahröffnung so ausgestaltet ist, dass sich der Tragrahmen beim Einfahren immer in gleicher horizontaler Stellung zu der Sattelkupplung ausrichtet, wodurch das sichere Verbinden von Stecker und Steckerbuchse ermöglicht ist.

Ferner kann der Stecker bekanntermaßen auf einer Grundplatte an dem Tragelement angeordnet sein, welche in vertikaler Richtung federnd gegenüber dem Tragrahmen gelagert ist. Beim Ankuppeln des Aufliegers bis zum endgültigen Herstellen der Verbindung von Stecker und Steckerbuchse wird die federbelastete Grundplatte oder der Stecker unter Andruck an eine Einführhilfe im Bereich der Einfahröffnung geführt, wodurch auch in vertikaler Richtung eine Positionierung automatisch erfolgt und somit etwa erforderlicher Höhenausgleich gewährleistet ist.

Bekannt ist aus der DE 10 2004 024 333 A1 dementsprechend insbesondere, den Tragrahmen der Steckvorrichtung als V-Förmige Rahmenkonstruktion auszubilden, deren Seiten an den Winkel der Einfahröffnung angepasst sind. Nach unten erstrecken sich von dem Tragrahmen beidseitig Seitenflächen die an ihrem königszapfenseitigen Ende in einen gemeinsamen Stützsteg übergehen. Der Stützsteg liegt an dem unteren Bund des Königszapfens an und leitet auftretende Kippmomente in den Königszapfen ein. Hierdurch ist die vertikale Lage des Tragrahmens relativ zum Königszapfen und der Aufliegerplatte definiert, wodurch sichergestellt ist, dass der Prozess des Ankuppelns in der vorstehend beschriebenen Weise durch vertikale und horizontale Führung sicher erfolgen kann.

Allerdings können verschleißbedingt und insbesondere im Fall von nachgerüsteten oder ausgetauschten Königszapfenanordnungen aufgrund von Fertigungstoleranzen Variationen in der Relativanordnung der Verbindungselemente und des Königszapfens zu Tage treten, die das sichere Ankuppeln trotz des zuvor beschriebenen Höhenausgleichs gefährden. Aufgabe der vorliegenden Erfindung ist es demnach, eine Königszapfenanordnung bereitzustellen, die ein gleichermaßen sicheres Ankuppeln auch im Verschleißfall und im Nachrüst- oder Reparaturfall auf einfache Weise sicherstellt.

Die Aufgabe wird gelöst durch eine Königszapfenanordnung gemäß Anspruch 1.

Erfindungsgemäß ist die eingangs genannte Königszapfenanordnung dadurch weitergebildet, dass mit dem Halter ein zu dem drehbaren Lagerring bzw. dem drehbaren Lageringsegment axial beabstandetes, an dem Königszapfen unmittelbar anliegendes Stützelement verbunden ist, welches bezogen auf die Drehachse in radialer Richtung längenverstellbar ist.

Der drehbare Lagerring oder das drehbare Lagerringsegment bildet zusammen mit dem feststehenden Lagerring oder dem feststehenden Lagerringsegment ein axial-radial-Drehlager, also eine obere Aufhängung für den Halter und/oder Tragrahmen mit lediglich einem rotatorischen Freiheitsgrad für selbigen. Die Position des Halters ist durch das Drehlager radial und axial relativ zum Königszapfen und somit der Aufliegerplatte bestimmt. Jedoch kann sich der Tragrahmen aufgrund seiner radialen Baulänge und eines ungünstigen Hebels an seinem freien, steckerseitigen Ende insbesondere bei auftretendem Verschleiß nach unten neigen. Dem kann nur in Teilen durch eine Versteifung der Lagerkonstruktion und des Tragrahmens entgegengewirkt werden, zumal auf eine möglichst leichte Bauweise dieser Komponenten geachtet werden sollte. Deshalb ist das Stützelement vorgesehen, das der Neigung entgegenwirkt, indem es axial beabstandet zu der Ebene des Drehlagers, diese ist definiert durch die Ebene der aufeinander aufliegenden axialen Gleitflächen der Lagerringe/Lagerringsegmente, eine untere Abstützung für den Halter und somit den Tragrahmen am Königszapfen bildet. Hierdurch ist, wie zuvor beschrieben, die vertikale Lage des Steckers relativ zum Königszapfen und zur Aufliegerplatte definiert. Jedoch erfolgt die Abstützung erfindungsgemäß nicht unmittelbar durch einen integralen Bestandteil des Tragrahmens, sondern über das separate Stützelement, welches in radialer Richtung längenverstellbar ist und dadurch eine Einstellmöglichkeit für die Neigung des Halters und des Tragrahmens bereitstellt. Dies ermöglicht eine Feinjustierung der vertikalen Lage des Steckers relativ zur Steckerbuchse, durch welche beispielsweise Fertigungstoleranzen, Verschleiß oder dergleichen ausgeglichen werden können, sodass das Ankuppeln in gewohnter Weise sicher erfolgen kann.

An dieser Stelle sei angemerkt, dass für das Drehlager sowohl feststehende Lagerringe und drehbare Lagerringe mit einem 360°-Umfang als auch nur jeweils "Lagerringsegmente" oder eine Kombination aus einem Lagerring einerseits und einem "Lageringsegment" andererseits verwendet werden können. Für die Gewährleistung des Freiheitsgrades der Drehbewegung und die die Positionsfestlegung in alle übrigen Dimensionen genügen grundsätzlich Lagerringsegmente, da die Sattelkupplung ohnehin nur eine Drehbewegung über einen Teilkreis von maximal ca. 260° erlaubt. Komplett ringförmige feste und drehbare Lagerringe haben allerdings den Vorteil einer höheren Steifigkeit, die wiederum insbesondere bei auftretenden Kippmomenten eine genauere Positiosdefinition sicherstellen und deshalb regelmäßig zu bevorzugen sind.

Das Stützelement weist vorzugsweises eine mit dem Königszapfen in Berührung stehende Gleitfläche auf. Dadurch, dass das Stützelement ein separates Bauteil ist, kann es in einfacher Weise im Hinblick auf seine Funktion als Gleitelement optimiert werden. Die geschieht besonders bevorzugt, indem die Gleitfläche von einer Oberfläche eines reibungsgeminderten Materials gebildet wird. Das Gleitelement kann in diesem Sinne überwiegend aus dem reibungsgemindertem Material gefertigt sein, man würde dann von einem Massivwerkstoff sprechen, oder eine Beschichtung aus einem solchen Material aufweisen. Ein reibungsgemindertes Material bezeichnet ein Material, welches tribologisch wirksame Füllstoffe, sogenannte Trockenschmierstoffe wie beispielsweise bevorzugt Grafit, PTFE, MoS₂, h-BN, Blei, Zinn oder dergleichen, enthält und daher in der Wechselwirkung mit dem Königszapfen gegenüber dem üblicherweise für den Tragrahmen zur Anwendung kommenden Aluminium- oder Stahlwerkstoff ohne Füllstoffe eine geringen Reibkoeffizienten aufweist. Als Matrixmaterial für derartige Massivwerkstoffe oder Beschichtungen kommen beispielsweise Kunststoff, Bronze oder Aluminium in Betracht.

Ebenfalls bevorzugt weist das Stützelement daher zumindest entlang der Gleitfläche eine Kunststoffmatrix auf, insbesondere aus thermoplastischem Kunststoff, insbesondere aus Polyethylen (PE), Polyamid (PA), Polypropylen (PP), Polyetheretherketon (PEEK), Polyetherimid (PEI), Polyoxymethylen (POM), Acrylnitril-Butadien-Styrol (ABS).

Der Königszapfen weist vorzugsweise eine koaxial um die Drehachse angeordnete Zylindermantelfläche mit dem Radius r oder zumindest ein Segment davon auf, an der das Stützelement anliegt. Auch hier wieder sei angemerkt, dass aufgrund des begrenzten Drehwinkels der Sattelkupplung ein Zylindersegment genügt, in der Regel der Königszapfen aber über seine gesamte axiale Erstreckung einen bzw. aufgrund seiner obligatorischen Einschnürung mehrere kreisförmige Querschnitte aufweist und in diesem Sinne wenigstens eine Zylindermantelfläche aufweist, an der sich das Stützelement abstützen kann. Da die obligatorische Einschnürung für die Verriegelung mit der Sattelkupplung vorgesehen ist, kann sich der Königszapfen wahlweise entweder oberhalb dieser, an dem sogenannten oberen Bund, oder unterhalb derselben, an dem sogenannten unteren Bund, abstützen.

Die Gleitfläche ist bevorzugt geometrisch der Gestalt ausgebildet, dass sich das Stützelement relativ zu dem Königszapfen in einer Richtung senkrecht zur Drehachse zentriert. Dies ist vorteilhafter Weise entweder dadurch realisiert, dass die Gleitfläche in einer Ebene senkrecht zur Drehachse eine V-förmige Kontur bildet, oder dass die Gleitfläche als konkav gekrümmte Fläche mit einem Radius r` ausgebildet ist, wobei der Radius r` zwischen r - 5 mm und r + 5 mm, weiterhin bevorzugt zwischen r - 1 mm und r + 5 mm und besonders bevorzugt zwischen r und r + 5 mm beträgt. In beiden Fälle ist die Position der Gleitfläche in tangentialer Richtung bezogen auf die Drehachse bzw. die Zylinderfläche des Königszapfens definiert.

Das Stützelement ist vorzugsweise mittels eines bezogen auf die Drehachse in radialer Richtung längenverstellbaren Verbindungselements mit dem Halter verbunden. Das Verbindungselement sorgt als Teil des Stützelements für dessen Verstellbarkeit in radialer Richtung. Insbesondere bevorzugt ist das Stützelement mittels einer sich bezogen auf die Drehachse in radialer Richtung erstreckenden Gewindestange (als Verbindungelement) mit dem Tragrahmen verbunden. Alternative Ausführungsformen sehen anstelle der Gewindestange Stifte oder Stangen in Verbindung mit Klemmstücken oder Klemmschrauben, Leisten mit Langlöchern und Verbindungsschrauben, eine Kniehebelanordnung oder verzahnte oder verklinkte Elemente wie beispielsweise eine Zahnstange und korrespondierende in die Verzahnung eingreifende Gegenstücke vor.

Der Halter weist bevorzugt eine Querstrebe auf, an der sich das längenverstellbare Verbindungselement und/oder die Gewindestange abstützt. Die Querstrebe erstreckt sich in einer Ebene senkrecht zur Drehachse und im Wesentlichen tangential in ausreichendem Abstand zum Königszapfen, um eine Längenverstellbarkeit des Stützelements zu ermöglichen.

Der feststehende Lagerring bzw. das feststehende Lagerringsegment ist vorzugsweise unmittelbar an dem Königszapfenflansch befestigt. Hierdurch ist eine einfache Austauschbarkeit oder Nachrüstbarkeit der Königszapfenanordnung möglich, ohne bauliche Veränderungen an dem Sattelauflieger selbst vornehmen zu müssen. Beispielweise kann ein alter Königszapfen von der Aufliegerplatte abgeschraubt und ein neuer Königszapfen mit gleichem Lochbild im Königszapfenflansch samt Drehlager und Halter an dessen Stelle montiert werden.

Der feststehende Lagerring bzw. das feststehende Lagerringsegment ist bezogen auf die Drehachse vorzugsweise radial innen liegend und der drehbare Lagering bzw. das drehbare Lagerringsegment radial außen liegend angeordnet. Auch dies trägt zu einer einfachen Austauschbarkeit oder Nachrüstbarkeit der Königszapfenanordnung bei gleichzeitig optimaler Drehführung bei, wie anhand der Zeichnungen nachfolgend erläutert werden wird.

Bei einteiliger Ausgestaltung, wenn also der Halter als bezogen auf die Drehachse radial auswärts gerichteter Tragrahmen ausgestaltet ist, ist an diesem ein in Richtung der Drehachse von dem Halter oder Tragrahmen nach oben abstehendes Distanzstück angeordnet, welches eingerichtet ist, den Halter oder Tragrahmen mittelbar oder unmittelbar an dem Sattelauflieger abzustützen.

Bei mehrteiliger Ausgestaltung, wenn also an dem Halter bezogen auf die Drehachse radial auswärts gerichtet ein Tragrahmen montiert ist, ist an diesem ein in Richtung der Drehachse von dem Tragrahmen abstehendes Distanzstück angeordnet, welches ebenso eingerichtet ist, den Tragrahmen mittelbar oder unmittelbar an dem Sattelauflieger abzustützen.

In beiden Fällen wird das längenverstellbare Stützelement vorzugsweise so eingestellt, dass der Tragrahmen bzw. der Halter mit dem Distanzstück an der Aufliegerplatte anliegt, wodurch eine Schwingungsneigung des Halters oder Tragrahmens vermindert wird und die Position des freien Endes des Halters bzw. Tragrahmens, an dem das Verbindungsmittel angeordnet ist, nochmals genauer bestimmt ist. Um mechanische Verspannungen bei Rotation des Halters um den Königzapfen zu vermeiden, wird das Stützelement vorteilhafterweise nach dem tiefsten Punkt des vom Halter beim Rotieren überstreichbaren Bereiches der Aufliegerplatte ausgerichtet.

Der drehbare Lagerring bzw. das drehbare Lagerringsegment weist vorteilhaft Weise ein sich in Richtung der Drehachse erstreckendes Zylinderwandsegment auf, an dem der Halter fixiert ist. Das Zylinderwandsegment bildet die vertikale Verbindung von der Ebene der axialen Drehlagerung zu dem Halter und ist zugleich geeignet, die Querstrebe zur Abstützung des längenverstellbaren Verbindungselements und/oder der Gewindestange zu bilden.

Das Zylinderwandsegment weist vorzugweise eine Breite in tangentialer Richtung von < 2,1 × r auf und ist damit bei einteiliger Bauform als radial innerster Teil des v-förmigen Tragelements oder bei zweiteiliger Bauform als innere Fortsetzung desselben an der Führung des Verbindungsmittels beim Ankuppeln beteiligt.

In einer bevorzugten Ausführungsform ist das Stützelement bezogen auf die Drehachse zumindest in radialer Richtung elastisch verformbar ausgebildet und/oder weist ein in dieser Richtung wirkendes Federelement auf, so dass das Stützelement unter einer einstellbaren Vorspannung an dem Königszapfen anliegt. Das Federelement kann beispielsweise eine Spiraldruckfeder, ein Tellerfederpaket oder ein elastisch verformbarer Kunststoffkörper sein. Diese Ausgestaltung in Verbindung mit der Längenverstellung des Stützelements erlaubt es, eine gezielte Vorspannung einzustellen, mit der immer sichergestellt ist, dass das Stützelement an dem Königszapfen und der Tragrahmen an der Aufliegerplatte mit konstantem Anpressdruck anliegt. Hierdurch wird eine etwaige Verspannung des Tragrahmens gemindert und zugleich lassen sich Schwingungen des Tragrahmens noch besser dämpfen.

Diese und weitere Merkmale und Vorteile der Erfindung werden nachfolgend anhand von Figuren näher erläutert. Es zeigen:
- Figur 1: eine perspektivische Schnittdarstellung einer Ausführungsform der erfindungsgemäßen Königszapfenanordnung;
- Figur 2: die Königszapfenanordnung von unten;
- Figur 3: die Königszapfenanordnung von unten mit Tragrahmen;
- Figur 4: die Königszapfenanordnung geschnitten in der Seitenansicht
- Figur 5: die Königszapfenanordnung in einer Explosionsdarstellung und
- Figur 6: eine schematische Darstellung einer Ausführungsform der erfindungsgemäßen Königszapfenanordnung in der Seitenansicht.

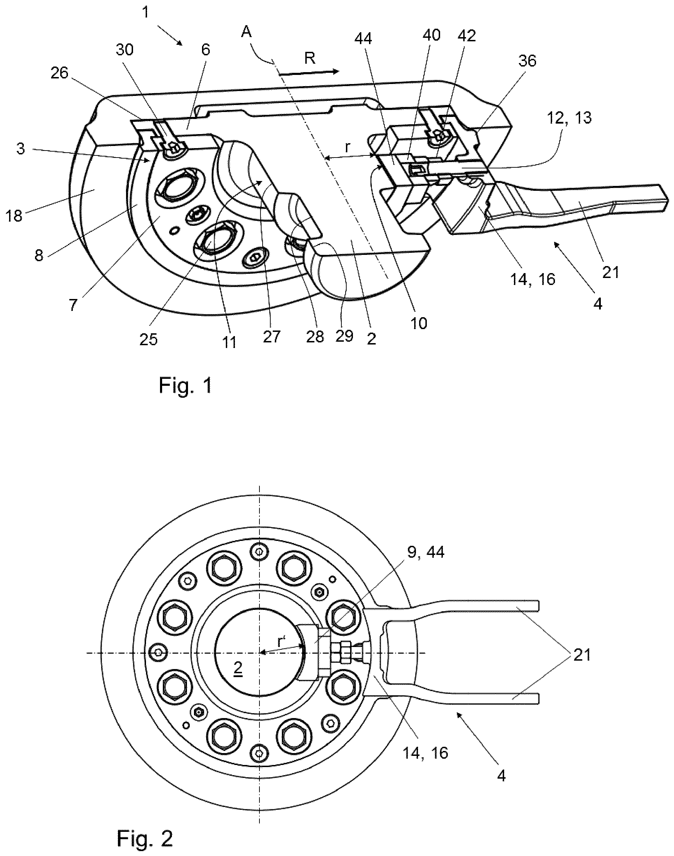

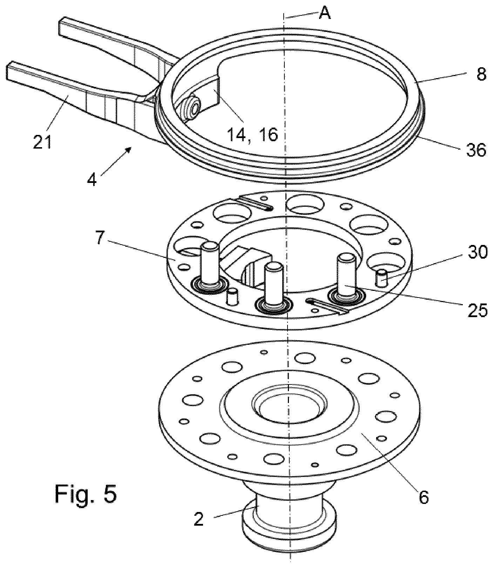

Die Figuren 1 bis 5 zeigen dieselbe Königszapfenanordnung 1 für einen Sattelauflieger eines Lastzuges, umfassend einen eine Drehachse A definierenden Königszapfen 2, ein um die Drehachse A angeordnetes Drehlager 3 und einen mit dem Drehlager 3 verbundenen und um die Drehachse A schwenkbaren Halter 4. Der Halter 4 ist in dieser mehrteiligen Ausführungsform als ein Montagesockel für einen Tragrahmen 20 ausgebildet und weist ein Zylinderwandsegment 16 und zwei gabelförmig im Wesentlichen radial von dem Zylinderwandsegment 16 abstehende Haltearmen 21 auf.

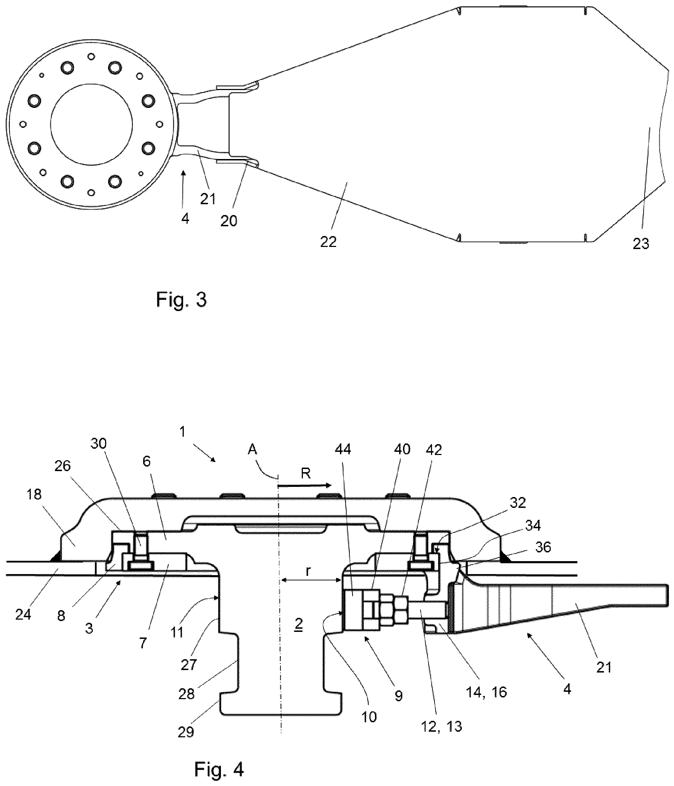

Der Tragrahmen 20 ist, wie in Figur 3 dargestellt, an den beiden Haltearmen 21 des Halters 4 fixiert. Es handelt sich also um eine mehrteilige Ausführung, bei der der Halter 4 als Montagesockel für den Tragrahmen 20 ausgestaltet ist. Auf der Oberseite weist der Tragrahmen 20 eine Schutzabdeckung 22 auf. Unter der Schutzabdeckung 22 befindet sich innerhalb des Tragrahmens 20 an dessen freiem Ende 23 und mittelbar über eine Grundplatte an diesem angebracht ein Verbindungsmittel (nicht dargestellt). Der Tragrahmen 20 ist abschnittsweise als V-förmige Rahmenkonstruktion ausgebildet, deren Seiten an den Winkel der hierzu korrespondierenden Einfahröffnung angepasst sind.

Der Königszapfen 2 weist einen Königszapfenflansch 6 zum Montieren des Königszapfens 2 an dem Sattelauflieger und hier genauer an einem an die Aufliegerplatte 24 angeschweißten Teller 18 auf. Die Montage erfolgt, wie im Stand der Technik bekannt, mittels kreisförmig entlang des Flansches 6 angeordneter Schrauben 25. Der Teller 18 weist eine Vertiefung 26 nach oben auf, in der der Königszapfenflansch 6 und in Teilen das Drehlager 3 aufgenommen wird. Die Tiefe der Vertiefung 26 zuzüglich der Dicke der Aufliegerplatte 24 sind so bemessen, dass das Drehlager 3 mit Ausnahme des angeformten Zylinderwandsegments 16 des Halters 4 nicht über die Unterseite der Aufliegerplatte 24 übersteht.

Der Königszapfen umfasst ansonsten in an sich bekannter Weise von oben nach unten betrachtet einen oberen Bund 27, eine Einschnürung 28 und einen unteren Bund 29. Der ober Bund 27, die Einschnürung 28 und der untere Bund 29 haben alle eine kreiszylindrische Grundform. Am oberen Bund hat der Königszapfen einen Radius r. Die Einschnürung 28 ist der Abschnitt an dem die Verriegelung der Sattelkupplung angreift.

Das Drehlager 3 umfasst einen relativ zum Königszapfen 2 feststehenden Lagerring 7 und einen hierzu drehbaren Lagerring 8. Der feststehende Lagerring 7 ist unmittelbar an dem Königszapfenflansch mittels Schrauben 30 befestigt.

Durch die zweifache Verschraubung des Flansches 6 und des feststehenden Lagerrings 7 kann die Königszapfenanordnung 1 insgesamt oder auch nur Teile des Drehlagers 3 auf einfache Weise ausgetauscht werden. Es sind insbesondere bei einer Nachrüstung keine baulichen Veränderungen an dem Sattelauflieger vorzunehmen, weil die erfindungsgemäße Königszapfenanordnung 1 einfach anstelle einer alten montiert werden kann. Hierfür sorgt nicht nur die identische Schraubverbindung, sondern auch der geringe für das Drehlager 3 samt Halter 4 benötigte Bauraum. Dazu ist es wiederum vorteilhaft, wenn, wie insbesondere in den Figuren 1 und 4 zu sehen, der feststehende Lagerring 7 bezogen auf die Drehachse A radial innen liegend und der drehbare Lagerring 8 radial außen liegend angeordnet sind.

Der drehbare Lagerring 8 bildet zusammen mit dem feststehenden Lagerring 7 ein axial-radial-Drehlager. In axialer Richtung wird die Lagerung durch die aufeinander aufliegenden axialen Gleitflächen der Lagerringe 7 und 8 erzielt. Die Gleitflächen definieren die "Drehebene" oder "Ebene des Drehlagers" 32, siehe Figur 4. In radialer Richtung liegen die Lageringe entlang kreiszylindrischer Flächen 34 aneinander an und beschränken somit den Freiheitsgrad der Bewegung des Halters 4 auf eine reine Drehbewegung. Entlang seiner äußeren Umfangsfläche weist der drehbare Lagerring 8 einen umlaufend abgesetzten Versteifungsrand 36 auf.

Der Halter 4 ist an dem drehbaren Lagerring 8 fixiert. In dem gezeigten Ausführungsbeispiel ist er mit seinem Zylinderwandsegment 16 einstückig an diesen angeformt. Das Zylinderwandsegment bildet so die vertikale Verbindung von der Ebene 32 der axialen Drehlagerung zu dem Halter 4.

Die Position des Halters 4 ist somit durch das Drehlager 3 radial und axial relativ zum Königszapfen 2 und Aufliegerplatte 24 bestimmt.

Damit der Tragrahmen 20 sich aufgrund seiner radialen Baulänge nicht oder nur möglichst wenig nach unten neigt, weist die Königszapfenanordnung 1 ein Stützelement 9 auf. Diese ist mit dem Halter 4 mittels eines bezogen auf die Drehachse A in radialer Richtung R längenverstellbaren Verbindungselements 12 verbunden. Es ist axial beabstandet unterhalb der Ebene 32 des Drehlagers 3 angeordnet und stützt sich dort unmittelbar an einer koaxial um die Drehachse A angeordnete Zylindermantelfläche 11 des oberen Bundes 27 des Königszapfens 2 ab. Während die Einschnürung 28 für die Verriegelung mit der Sattelkupplung vollumfänglich frei bleiben muss, kann in einer alternativen Ausgestaltung das Stützelement 9 sich auch am unteren Bund 29 abstützen, wodurch ein insgesamt größerer Hebel und damit eine festere Abstützung bewirkt wird.

Das Verbindungselement 12 ist in diesem Beispiel als Gewindestange 13 ausgeführt, die auf der radial äußeren Seite in das Zylinderwandsegment 16, welches hier die Querstrebe 14 bildet, eingeschraubt und stützt auf diese Weise sich an diesem ab. Alternativ kann es beispielsweise auch durch eine stoffschlüssige oder kraftschlüssige Verbindung an diesem fixiert werden. Auf der anderen Seite ist die Gewindestange 12 in einen Metallklotz 40 des Stützelements 9 eingeschraubt und mit einer Mutter 42 gekontert. Die Gewindestange 12 sorgt als Teil des Stützelements 9 für dessen Verstellbarkeit in radialer Richtung R. Wird das Stützelement durch Herausschrauben der Gewindestange beispielsweise in radialer Richtung verlängert, wird der Halter 4 an seinem freien Ende angehoben und umgekehrt durch Einschrauben abgesenkt. Der Halter kann so exakt beispielsweise an den Abnutzungsgrad des Königszapfen, bauliche Toleranzen des Tragrahmens, Steckers oder der Aufliegerplatte angepasst werden, so dass sich der Stecker vertikal exakt in seine Sollposition bringen lässt.

Das Stützelement 9 weist ferner eine unmittelbar mit der Zylinderfläche 11 des Königszapfens 2 in Berührung stehende Gleitfläche 10 auf, die an einem Kunststoffklotz 44 ausgebildet ist, der wiederum auf den Metallklotz 40 des Stützelements 9 aufgeklebt oder anderweitig an diesem befestigt ist. Der Kunststoffklotz 44 hat eine Kunststoffmatrix, in der tribologisch wirksame Füllstoffpartikel dispergiert vorliegen können um den Reibkoeffizienten im Zusammenwirken mit der Oberfläche des Königszapfens 2 zu mindern.

Die Gleitfläche 10 ist als konkav gekrümmte Fläche mit einem Radius r` ausgebildet, wodurch sich das Stützelement 9 relativ zu dem Königszapfen in tangentialer Richtung bezogen auf die Drehachse A bzw. die Zylinderfläche 11 des Königszapfens 2 ausrichtet.

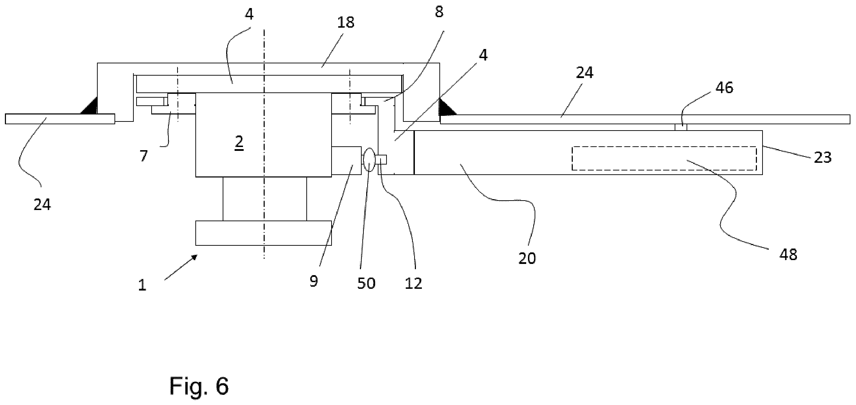

In Figur 6 ist eine erfindungsgemäße Königszapfenanordnung mit radial auswärts gerichtetem Tragrahmen 20 schematisch dargestellt, an dem ein in Richtung der Drehachse A von dem Tragrahmen 20 nach oben abstehendes Distanzstück 46 angeordnet ist, welches den Tragrahmen 20 an der Aufliegerplatte 24 des Sattelaufliegers abstützt.

Innerhalb des Tragrahmens 20 befindet sich an dessen freiem Ende 23 angebracht ein Verbindungsmittel 48, gestrichelt dargestellt.

Das Stützelement 9 weist bei dieser Ausführungsform ein bezogen auf die Drehachse A in radialer Richtung R wirkendes Federelement 50 auf. Das Federelement 50 ist schematisch dargestellt und kann beispielsweise eine Spiraldruckfeder, ein Tellerfederpaket oder ein elastisch verformbarer Kunststoffkörper sein. In Verbindung mit der Längenverstellung des Stützelements 9 erlaubt es, eine gezielte Vorspannung einzustellen, mit der immer sichergestellt ist, dass das Stützelement 9 an dem Königszapfen 2 und der Tragrahmen 20 über das Distanzstück 46 an der Aufliegerplatte 24 mit konstantem Anpressdruck anliegt.

### Bezugszeichenliste

- 1: Königszapfenanordnung
- 2: Königszapfen
- 3: Drehlager
- 4: Halter
- 6: Königszapfenflansch
- 7: feststehender Lagerring
- 8: drehbarer Lagerring
- 9: Stützelement
- 10: Gleitfläche
- 11: Zylindermantelfläche
- 12: Verbindungselement
- 13: Gewindestange
- 14: Querstrebe
- 16: Zylinderwandsegment
- 18: Teller
- 20: Tragrahmen
- 21: Haltearm
- 22: Schutzabdeckung
- 23: freies Ende (des Tragrahmens)
- 24: Aufliegerplatte
- 25: Schraube
- 26: Vertiefung
- 27: oberer Bund
- 28: Einschnürung
- 29: unterer Bund
- 30: Schraube
- 32: Drehebene/Ebene des Drehlagers
- 34: kreiszylindrische Fläche
- 36: Rand
- 40: Metallklotz
- 42: Mutter
- 44: Kunststoffklotz
- 46: Distanzstück
- 48: Verbindungsmittel
- 50: Federelement

## Patentansprüche

1. Königszapfenanordnung (1) für einen Sattelauflieger eines Lastzuges, umfassend einen eine Drehachse (A) definierenden Königszapfen (2), ein um die Drehachse (A) angeordnetes Drehlager (3) und einen mit dem Drehlager (3) verbundenen und um die Drehachse (A) schwenkbaren Halter (4) zur mittelbaren oder unmittelbaren Halterung insbesondere eines elektrischen und/oder elektromagnetischen und/oder pneumatischen und/oder hydraulischen Verbindungsmittels,
wobei der Königszapfen (2) einen Königszapfenflansch (6) zum Montieren des Königszapfens (2) mittelbar oder unmittelbar an dem Sattelauflieger aufweist,
wobei das Drehlager (3) einen relativ zum Königszapfen (2) feststehenden Lagerring (7) oder ein feststehendes Lagerringsegment und einen relativ hierzu drehbaren Lagerring (8) oder ein drehbares Lagerringsegment aufweist,
wobei der Halter (4) an dem drehbaren Lagerring (8) bzw. drehbaren Lagerringsegment fixiert ist
und wobei mit dem Halter (4) ein zu dem drehbaren Lagerring (8) bzw. dem drehbaren Lagerringsegment axial beabstandetes, an dem Königszapfen (2) unmittelbar anliegendes Stützelement (9) verbunden ist, welches bezogen auf die Drehachse (A) in radialer Richtung (R) längenverstellbar ist.

2. Königszapfenanordnung nach Anspruch 1,
**dadurch gekennzeichnet, dass** das Stützelement (9) eine mit dem Königszapfen (2) in Berührung stehende Gleitfläche (10) aufweist.

3. Königszapfenanordnung nach einem der vorstehenden Ansprüche,
**dadurch gekennzeichnet, dass** das Stützelement (9) zumindest entlang der Gleitfläche eine Kunststoffmatrix, insbesondere aus thermoplastischen Kunststoff, insbesondere aus Polyethylen (PE), Polyamid (PA), Polypropylen (PP), Polyetheretherketon (PEEK), Polyetherimid (PEI), Polyoxymethylen (POM), Acrylnitril-Butadien-Styrol (ABS), aufweist.

4. Königszapfenanordnung nach einem der vorstehenden Ansprüche,
**dadurch gekennzeichnet, dass** der Königszapfen (2) eine koaxial um die Drehachse (A) angeordnete Zylindermantelfläche (11) mit einem Radius r oder zumindest ein Segment davon aufweist, an der das Stützelement (9) anliegt, wobei die Gleitfläche (10) geometrisch ausgestaltet ist, das Stützelement relativ zu dem Königszapfen in einer Richtung senkrecht zur Drehachse zu zentrieren.

5. Königszapfenanordnung nach Anspruch 4,
**dadurch gekennzeichnet, dass** die Gleitfläche (10) in einer Ebene senkrecht zur Drehachse (A) eine V-förmige Kontur bildet.

6. Königszapfenanordnung nach Anspruch 4,
**dadurch gekennzeichnet, dass** die Gleitfläche (10) als konkav gekrümmte Fläche mit Radius r' ausgebildet ist, wobei der Radius r' zwischen r - 5 mm und r + 5 mm beträgt.

7. Königszapfenanordnung nach einem der vorstehenden Ansprüche,
**dadurch gekennzeichnet, dass** das Stützelement (9) mittels eines bezogen auf die Drehachse (A) in radialer Richtung (R) längenverstellbaren Verbindungselements (12) mit dem Halter (4) verbunden ist.

8. Königszapfenanordnung nach einem der vorstehenden Ansprüche,
**dadurch gekennzeichnet, dass** das Stützelement (9) mittels einer sich bezogen auf die Drehachse (A) in radialer Richtung (R) erstreckenden Gewindestange (13) mit dem Halter (4) verbunden ist.

9. Königszapfenanordnung nach Anspruch 7 oder 8,
**dadurch gekennzeichnet, dass** der Halter eine Querstrebe (14) aufweist, an der sich das längenverstellbare Verbindungselement (12) und/oder die Gewindestange (13) abstützt.

10. Königszapfenanordnung nach einem der vorstehenden Ansprüche,
**dadurch gekennzeichnet, dass** der feststehende Lagerring (7) bzw. das feststehende Lagerringsegment unmittelbar an dem Königszapfenflansch (6) befestigt ist.

11. Königszapfenanordnung nach einem der vorstehenden Ansprüche,
**dadurch gekennzeichnet, dass** der feststehende Lagerring (7) bzw. das feststehende Lagerringsegment bezogen auf die Drehachse (A) radial innen liegend und der drehbare Lagering (8) bzw. das drehbare Lagerringsegment radial außen liegend angeordnet ist.

12. Königszapfenanordnung nach einem der vorstehenden Ansprüche,
**dadurch gekennzeichnet, dass** an dem Halter (4) bezogen auf die Drehachse (A) radial auswärts gerichtet ein Tragrahmen (20) montiert ist, an dem ein in Richtung der Drehachse (A) abstehendes Distanzstück (46) angeordnet ist, welches eingerichtet ist, den Tragrahmen (20) mittelbar oder unmittelbar an dem Sattelauflieger abzustützen.

13. Königszapfenanordnung nach einem der Ansprüche 1 bis 11,
**dadurch gekennzeichnet, dass** der Halter (4) als bezogen auf die Drehachse (A) radial auswärts gerichteter Tragrahmen (20) ausgestaltet ist, an dem ein in Richtung der Drehachse (A) abstehendes Distanzstück (46) angeordnet ist, welches eingerichtet ist, den Halter (4) mittelbar oder unmittelbar an dem Sattelauflieger abzustützen.

14. Königszapfenanordnung nach einem der vorstehenden Ansprüche,
**dadurch gekennzeichnet, dass** der drehbare Lagerring (8) bzw. das drehbare Lagerringsegment ein sich in Richtung der Drehachse (A) erstreckendes Zylinderwandsegment (16) aufweist, an dem der Halter (4) fixiert ist.

15. Königszapfenanordnung nach einem der vorstehenden Ansprüche,
**dadurch gekennzeichnet, dass** das Stützelement bezogen auf die Drehachse (A) zumindest in radialer Richtung (R) elastisch verformbar ausgebildet ist und/oder ein in dieser Richtung wirkendes Federelement aufweist, so dass das Stützelement unter einer einstellbaren Vorspannung an dem Königszapfen (2) anliegt.

## Claims

1. A kingpin assembly (1) for a semitrailer of a road train, comprising a kingpin (2) defining an axis of rotation (A), a pivot bearing (3) arranged around the axis of rotation (A), and a holder (4) connected to the pivot bearing (3) and pivotable about the axis of rotation (A) for indirectly or directly holding in particular an electrical and/or electromagnetic and/or pneumatic and/or hydraulic connecting means,
wherein the king pin (2) comprises a king pin flange (6) for mounting the king pin (2) indirectly or directly to the semitrailer,
wherein the pivot bearing (3) comprises a bearing ring (7) fixed relative to the king pin (2) or a bearing ring segment fixed relative to the king pin (2) and a bearing ring (8) rotatable relative to the king pin (2) or a bearing ring segment rotatable relative to the king pin (2),
wherein the holder (4) is fixed to the rotatable bearing ring (8) or rotatable bearing ring segment,
and wherein a support element (9) is connected to the holder (4), which support element is axially spaced from the rotatable bearing ring (8) or the rotatable bearing ring segment, abuts directly against the king pin (2) and is adjustable in length in the radial direction (R) with respect to the axis of rotation (A).

2. The kingpin assembly according to claim 1,
**characterized in that** the support element (9) has a sliding surface (10) in contact with the king pin (2).

3. The kingpin assembly according to any one of the preceding claims,
**characterized in that** the support element (9) has, at least along the sliding surface, a plastic matrix, in particular of thermoplastic material, in particular of polyethylene (PE), polyamide (PA), polypropylene (PP), polyetheretherketone (PEEK), polyetherimide (PEI), polyoxymethylene (POM), acrylonitrile-butadiene-styrene (ABS).

4. The kingpin assembly according to any one of the preceding claims, **characterized in that** the kingpin (2) has a cylindrical surface (11) arranged coaxially about the axis of rotation (A) and having a radius r, or at least a segment thereof, against which the support element (9) abuts, wherein the sliding surface (10) is geometrically configured to center the support element relative to the kingpin in a direction perpendicular to the axis of rotation.

5. The kingpin assembly according to claim 4,
**characterized in that** the sliding surface (10) forms a V-shaped contour in a plane perpendicular to the axis of rotation (A).

6. The kingpin assembly according to claim 4,
**characterized in that** the sliding surface (10) is formed as a concavely curved surface with radius r', the radius r' being between r - 5 mm and r + 5 mm.

7. The kingpin assembly according to one of the preceding claims,
**characterized in that** the support element (9) is connected to the holder (4) by means of a connecting element (12) which is adjustable in length in the radial direction (R) with respect to the axis of rotation (A).

8. The kingpin assembly according to one of the preceding claims,
**characterized in that** the support element (9) is connected to the holder (4) by means of a threaded rod (13) extending in the radial direction (R) with respect to the axis of rotation (A).

9. The kingpin assembly according to claim 7 or 8,
**characterized in that** the holder has a transverse strut (14) to which the length-adjustable connecting element (12) and/or the threaded rod (13) are supported.

10. The kingpin assembly according to one of the preceding claims,
**characterized in that** the fixed bearing ring (7) or the fixed bearing ring segment is attached directly to the king pin flange (6).

11. The kingpin assembly according to one of the preceding claims,
**characterized in that** the fixed bearing ring (7) or the fixed bearing ring segment is arranged radially inwardly with respect to the axis of rotation (A) and the rotatable bearing ring (8) or the rotatable bearing ring segment is arranged radially outwardly.

12. The kingpin assembly according to one of the preceding claims,
**characterized in that** a support frame (20) is mounted on the holder (4) radially outwardly with respect to the axis of rotation (A), on which support frame (20) a spacer (46) is arranged projecting in the direction of the axis of rotation (A), which spacer (46) is arranged to support the support frame (20) indirectly or directly on the semitrailer.

13. The kingpin assembly according to any one of claims 1 to 11,
**characterized in that** the holder (4) is configured as a supporting frame (20) which is oriented radially outwardly with respect to the axis of rotation (A) and on which is arranged a spacer (46) which projects in the direction of the axis of rotation (A) and is arranged to support the holder (4) indirectly or directly on the semitrailer.

14. The kingpin assembly according to any of the preceding claims,
**characterized in that** the rotatable bearing ring (8) or the rotatable bearing ring segment has a cylinder wall segment (16) extending in the direction of the axis of rotation (A), to which the holder (4) is fixed.

15. The kingpin assembly according to any of the preceding claims,
**characterized in that** the support element is designed to be elastically deformable at least in the radial direction (R) with respect to the axis of rotation (A) and/or has a spring element acting in this direction, so that the support element abuts against the king pin (2) under an adjustable pretension.

## Revendications

1. Ensemble de tourillon de tête (1) pour une semi-remorque d'un camion, comprenant un tourillon de tête (2) définissant un axe de rotation (A), un palier pivotant (3) agencé autour de l'axe de rotation (A) et un support (4) relié au palier pivotant (3) et pouvant pivoter autour de l'axe de rotation (A), destiné à supporter directement ou indirectement plus particulièrement un moyen de liaison électrique et/ou électromagnétique et/ou pneumatique et/ou hydraulique,
le tourillon de tête (2) comprenant une bride de tourillon de tête (6) pour monter le tourillon de tête (2) directement ou indirectement à la semi-remorque,
le palier pivotant (3) comprenant une bague de palier (7) fixe par rapport au tourillon de tête (2) ou un segment de bague de palier fixe et une bague de palier (8) rotative ou un segment de bague de palier rotatif par rapport au dernier,
le support (4) étant fixé à la bague de palier (8) rotative ou au segment de bague de palier rotatif
et un élément de support (9) étant relié au support (4), l'élément étant espacé axialement de la bague de palier rotative (8) ou du segment de bague de palier rotatif et étant en appui direct au tourillon de tête (2) et étant réglable par rapport à l'axe de rotation (A) en longueur dans la direction radiale (R).

2. Ensemble de tourillon de tête selon la revendication 1, **caractérisé en ce que** l'élément de support (9) comprend une surface de glissement qui est en contact avec le tourillon de tête (2).

3. Ensemble de tourillon de tête selon l'une des revendications précédentes, **caractérisé en ce que** l'élément de support (9) comprend, au moins le long de la surface de glissement, une matrice en matière synthétique, en particulier en matière synthétique thermoplastique, en particulier en polyéthylène (PE), polyamide (PA), polypropylène (PP), polyétheréthercétone (PEEK), polyéthérimide (PEI), polyoxyméthylène (POM), acrylnitrile-butadiène-styrène (ABS).

4. Ensemble de tourillon de tête selon l'une des revendications précédentes, **caractérisé en ce que** le tourillon de tête (2) comprend une surface d'enveloppe (11) de cylindre avec un rayon r disposée de manière coaxiale autour de l'axe de rotation (A), ou du moins une partie de celle-ci, à laquelle s'appuie l'élément de support (9), la surface de glissement (10) étant configurée géométriquement pour centrer l'élément de support par rapport au tourillon de tête dans une direction perpendiculaire à l'axe de rotation.

5. Ensemble de tourillon de tête selon la revendication 4, **caractérisé en ce que** la surface de glissement (10) forme un profil en forme de V dans un plan perpendiculaire à l'axe de rotation (A).

6. Ensemble de tourillon de tête selon la revendication 4, **caractérisé en ce que** la surface de glissement (10) est formée comme une surface concave avec un rayon r', le rayon r' se situant entre r - 5 mm et r + 5 mm.

7. Ensemble de tourillon de tête selon l'une des revendications précédentes, **caractérisé en ce que** l'élément de support (9) est relié au support (4) à l'aide d'un élément de fixation (12) réglable en longueur en direction radiale (R) par rapport à l'axe de rotation (A).

8. Ensemble de tourillon de tête selon l'une des revendications précédentes, **caractérisé en ce que** l'élément de support (9) est relié au support (4) à l'aide d'une tige filetée (13) s'étendant en direction radiale (R) par rapport à l'axe de rotation (A).

9. Ensemble de tourillon de tête selon la revendication 7 ou 8, **caractérisé en ce que** le support comprend une entretoise transversale (14) à laquelle s'appuie un élément de fixation (12) réglable en longueur et/ou la tige filetée (13).

10. Ensemble de tourillon de tête selon l'une des revendications précédentes, **caractérisé en ce que** la bague de palier (7) fixe ou le segment de bague de palier fixe est fixé directement à la bride de tourillon de tête (6).

11. Ensemble de tourillon de tête selon l'une des revendications précédentes, **caractérisé en ce que**, par rapport à l'axe de rotation (A), la bague de palier (7) fixe ou le segment de bague de palier fixe est disposé radialement à l'intérieur et **en ce que** la bague de palier (8) rotative ou le segment de bague de palier rotatif est disposé radialement à l'extérieur.

12. Ensemble de tourillon de tête selon l'une des revendications précédentes, **caractérisé en ce que**, sur le support (4), un cadre porteur (20) est monté orienté radialement vers l'extérieur par rapport à l'axe de rotation (A), sur lequel est disposée une pièce intercalaire (46) s'étendant dans la direction de l'axe de rotation (A) et qui est agencée pour soutenir le cadre porteur (20) directement ou indirectement à la semi-remorque.

13. Ensemble de tourillon de tête selon l'une des revendications 1 à 11, **caractérisé en ce que** le support (4) est configuré comme un cadre porteur (20) orienté radialement vers l'extérieur par rapport à l'axe de rotation (A) et sur lequel est disposée une pièce intercalaire (46) s'étendant dans la direction de l'axe de rotation (A) et qui est agencée pour soutenir le support (4) directement ou indirectement à la semi-remorque.

14. Ensemble de tourillon de tête selon l'une des revendications précédentes, **caractérisé en ce que** la bague de palier rotative (8) ou le segment de bague de palier rotatif comprend un segment de paroi de cylindre s'étendant en direction de l'axe de rotation (A) auquel le support (4) est fixé.

15. Ensemble de tourillon de tête selon l'une des revendications précédentes, **caractérisé en ce que** l'élément de soutien est conçu pour être déformable élastiquement au moins en direction radiale par rapport à l'axe de fixation (A) et/ou comprend un ressort agissant dans cette direction si bien que l'élément de soutien soit en appui au tourillon de tête (2) sous une précontrainte réglable.
